# EUROPÄISCHE PATENTSCHRIFT

(11) **EP 1 218 080 B1**
(45) Veröffentlichungstag und Bekanntmachung des Hinweises auf die Patenterteilung: **18.06.2003**
(21) Anmeldenummer: 00969189.0
(22) Anmeldetag: 18.08.2000
(51) Int. Cl.: B01D 25/127, B01D 25/172, B01D 25/34, B01D 25/38

(54) **FILTERPRESSE**
FILTER PRESS
FILTRE-PRESSE

(30) Priorität: 18.09.1999 DE 19944848
(43) Veröffentlichungstag der Anmeldung: 03.07.2002
(73) Patentinhaber: Outokumpu Oyj, 02201 Espoo (FI)
(72) Erfinder: CLAESSEN, Wilhelm, 52070 Aachen (DE); GRAFEN, Karl, 52146 Würselen (DE); SPÖLGEN, Hermann, Josef, 52379 Langerwehe (DE); WESP, Menrad, 52134 Herzogenrath (DE)
(74) Vertreter: Bauer, Dirk, Dipl.-Ing. Dipl.-Kfm.
(86) Internationale Anmeldenummer: DE0002828
(87) Internationale Veröffentlichungsnummer: WO01021275

(56) Entgegenhaltungen:
- DE-A- 19 546 701
- DE-C- 19 745 289
- DE-C- 19 944 848

## Beschreibung

Die Erfindung betrifft eine Filterpresse zur Filtration von Suspensionen, bestehend aus einem Gestell, einer daran befestigten Stützplatte, einer verschiebbaren Anpreßplatte und einem Paket vertikaler Filterplatten, die zwischen der Stützplatte und der Anpreßplatte angeordnet sind, wobei jede sich zwischen zwei Filterplatten befindliche Filterkammer mindestens ein Filtertuch aufweist, das S-förmig um zwei horizontal ausgerichtete Umlenkkörper geführt ist, und wobei die Umlenkkörper mittels zweier, auf gegenüberliegenden Längsseiten der Filterpresse angeordneter Hubelemente einer Hubvorrichtung, die mit stirnseitig vorstehenden Mitnehmern der Umlenkkörper koppelbar sind, vertikal und relativ zu dem zugeordneten Filtertuch bewegbar sind.

Aus der DE 195 46 701 A1 ist eine sich für eine vollautomatische Betriebsweise eignende Filterpresse bekannt, bei der die Hubelemente als sich über die gesamte Länge des Filterplattenpakets erstreckende Hubbalken ausgebildet sind. Diese Hubbalken sind in Längsrichtung der Filterpresse nicht verschiebbar, jedoch vertikal zu dem Pressengestell auf- und abbewegbar, um aufgrund der Koppelung mit den Mitnehmern der als Walzenpaare ausgeführten Umlenkkörper eine vertikale Auf- und Abbewegung derselben zu ermöglichen. Im Zuge der vertikalen Aufwärtsbewegung der Walzenpaare kommt es zu einer Verlagerung der S-förmigen Umschlingung des Filtertuchs, so daß eventuell daran anhaftender Filterkuchen aufgrund des kleinen Krümmungsradius im Walzenbereich abgelöst wird und herabfällt.

Die Nachteile dieser bekannten Filterpresse bestehen darin, daß die Hubvorrichtung wegen der gleichzeitigen Vertikalbewegung sämtlicher Walzenpaare sehr massiv ausgeführt werden muß und daß mit einer derartigen Filterpresse lediglich eine begrenzte Filterleistung erbracht werden kann, weil die Zahl der Filterplatten und damit auch die zur Verfügung stehende Filterfläche beschränkt ist.

Eine Weiterentwicklung der vorstehend beschriebenen Filterpresse ist aus der DE 197 45 289 C1 bekannt. Dabei handelt es sich um eine Filterpresse der eingangs beschriebenen Art, bei der das Filterplattenpaket in mehrere Sektionen unterteilt ist und bei der die Hubvorrichtung in Hubschienen horizontal verfahrbare Mitnehmerwagen aufweist, die jeweils nur für die Kopplung der Mitnehmer einer Sektion von Filterplatten mit der Hubvorrichtung sorgen. Es findet somit ein sektionsweise-sequentielles Ablösen des Filterkuchens von den Filtertüchern statt, die mit Hilfe einer schwächer dimensionierten und damit kostengünstiger herstellbaren Hubvorrichtung realisiert werden kann.

Trotz der unzweifelhaften Verbesserung weist auch die in der DE 197 45 289 C1 offenbarte Filterpresse noch gewisse Nachteile auf. So ist beispielsweise die Zugänglichkeit zu den Filterplatten durch die sich über die gesamte Länge des Filterplattenpakets erstreckenden Hubschienen erschwert. Auch sind die gegenüber der Filterpresse gemäß der DE 195 46 701 A1 zwar reduzierten Massen der beim Kuchenaustrag bewegten Teile immer noch recht groß, so daß der Aufwand und die Kosten für die Hubvorrichtung insgesamt hoch sind.

Der Erfindung liegt die Aufgabe zugrunde, eine Filterpresse mit sektionsweise-sequentieller Ablösung des Filterkuchens von den Filtertüchern derselben vorzuschlagen, bei der bedarfsweise eine gute seitliche Zugänglichkeit zu einzelnen Filterplatten gegeben ist und des weiteren der Aufwand für die Hubvorrichtung für die Umlenkkörper reduziert ist.

Ausgehend von einer Filterpresse der eingangs genannten Art, wird diese Aufgabe erfindungsgemäß dadurch gelöst, daß sich die Hubvorrichtung insgesamt in Richtung einer Längsachse der Filterpresse lediglich über einen Teilbereich der Länge des Filterplattenpakets erstreckt und in Richtung der Längsachse der Filterpresse bewegbar ist, wobei die Hubelemente relativ zu der Hubvorrichtung lediglich in vertikale Richtung bewegbar sind.

Während die Hubvorrichtung bei den Filterpressen gemäß der DE 195 46 701 A1 und der DE 197 45 289 C1 gestellfest ist, ist die Hubvorrichtung gemäß der Erfindung in Längsrichtung der Filterpresse relativ zu dieser bewegbar. Die Hubvorrichtung insgesamt wird somit zeitlich nacheinander in eine Position gebracht, in der gerade die Umlenkkörper durch Kopplung mit den Hubelementen vertikal bewegbar sind, die zu den aktuell zu entleerenden Filterkammern gehören. Die Hubschienen können aus diesem Grunde - in Längsrichtung der Filterpresse betrachtet - starr mit der Hubeinrichtung verbunden sein und erhalten ihre Beweglichkeit in Längsrichtung der Filterpresse nur über die Verfahrbarkeit der Hubvorrichtung insgesamt. Sinnvollerweise ist die Hubvorrichtung verfahrbar an dem Gestell der Filterpresse gelagert.

Vorteilhafterweise lassen sich beispielsweise bei einer 40 Filterplatten aufweisenden Filterpresse fünf Sektionen mit jeweils acht Filterplatten in fünf hintereinanderfolgenden Schritten mit jeweils einem Hubvorgang einer Hubvorrichtung entleeren lassen, deren Hubelement mit den Mitnehmern von jeweils acht Umlenkkörpern gleichzeitig koppelbar ist.

Gemäß einer Ausgestaltung der erfindungsgemäßen Filterpresse ist vorgesehen, daß die Hubeinrichtung ein Hubwagen ist, der auf oberen horizontalen Längsträgern des Gestells verfahrbar und mit zwei vertikal ausgerichteten, sich seitlich neben das Filterplattenpaket erstreckenden Seitenteilen versehen ist, in denen die Hubelemente geführt sind. Die ohnehin an dem Pressengestell vorhandenen horizontalen Längsträger eignen sich in idealer Weise als Lagerkonstruktion für den Hubwagen. Die seitliche Führung der Hubelemente in den vertikal ausgerichteten Seitenteilen gestattet in einfacher Weise die Verwendung von Zugmittelantrieben für die Vertikalbewegung der Hubelemente, beispielsweise in Form von Ketten- oder Seiltrieben.

Eine Weiterbildung der Erfindung besteht darin, daß die Hubelemente Aufnahmeelemente aufweisen, deren Mittelabstand mit dem Abstand der Mitnehmer der Umlenkkörper übereinstimmt, der vorliegt, wenn zwei benachbarte Filterplatten um einen durch die Verbindungslaschen definierten für den Kuchenaustrag notwendigen Abstand voneinander entfernt sind, wobei die Gesamtzahl der Filterplatten einem ganzzahligen Vielfachen der Anzahl der Aufnahmeelemente der Hubelemente entspricht.

Zweckmäßigerweise sind die Mitnehmer an den Umlenkkörpern als waagerecht ausgerichtete Bolzen und die Aufnahmeelemente an den Hubelementen als Zapfen ausgebildet, die sich von einem waagerecht ausgerichteten Grundkörper des Hubelements senkrecht nach oben erstrekken.

Die Erfindung weiter ausgestaltend, ist vorgesehen, daß der Hubwagen eine vertikal zu diesem verstellbare Entriegelungseinrichtung aufweist, wobei mittels Kontaktflächen der Entriegelungseinrichtung auf Schaltflächen von gelenkig mit jeweils einer Filterplatte verbundenen Verbindungslaschen zwischen zwei benachbarten Filterplatten eine Schaltkraft zur Entriegelung der Verbindungslaschen ausübbar ist.

Auf diese Weise können die Verbindungslaschen gerade nur der Sektion entriegelt werden, bei der gerade der Kuchenaustrag stattfinden soll und oberhalb derer sich daher gerade der Hubwagen befindet. Aufgrund der vertikalen Verstellbarkeit der Entriegelungseinrichtung relativ zu dem Hubwagen läßt sich dieser zunächst so oberhalb des Filterplattenpakets bewegen, daß die Schaltflächen der Verbindungslaschen nicht berührt werden und die Filterplatten daher gegeneinander verriegelt bleiben.

Zweckmäßigerweise sind die Kontaktflächen als Kufen ausgebildet und die Entriegelungseinrichtung ist mittels eines Fluidzylinders aus einer Ruheposition, in der sich die Kontaktflächen oberhalb der Schaltflächen befinden, in eine Schaltposition verschwenkbar, in der die Verbindungslaschen entriegelt sind.

Um nach dem Austrag des Filterkuchens eine gründliche Reinigung sowohl des Filtertuchs als auch des Umlenkkörpers zu bewerkstelligen, wird vorgeschlagen, daß an dem Hubelement mindestens ein Spritzrohr gelenkig befestigt ist, das aus einer Ruheposition, in der es senkrecht und vollständig außerhalb einer Projektion der Filterplatten in Längsrichtung der Filterpresse angeordnet ist, in eine Reinigungsposition überführbar ist, in der es ungefähr waagerecht ist, wobei das Filtertuch über seine gesamte Breite mit einer aus Düsen des Spritzrohrs unter Druck austretenden Reinigungsflüssigkeit beaufschlagbar ist. Durch eine vertikale Aufund Abwärtsbewegung des Spritzrohres kann so die ganze Fläche des Filtertuchs gereinigt werden.

Hierdurch wird es möglich, das Spritzrohr während des Ablösevorgangs des Filterkuchens außerhalb des zwischen den Filterplatten bestehenden Zwischenraums anzuordnen und erst während des flüssigkeitsunterstützten Reinigungsvorgangs das Spritzrohr in den Zwischenraum hineinzuschwenken. In der eingeschwenkten Stellung kann das Spritzrohr dabei ohne weiteres eine Position einnehmen, die während des Filterkuchenaustrags aufgrund herabfallender Teile des Filterkuchens nicht möglich wäre.

Sinnvollerweise ist die Anzahl der bei einer Hubbewegung reinigbaren Filtertücher kleiner als die Anzahl der in einem Hubelement vorhandenen Aufnahmeelemente.

Da der zur gründlichen Reinigung der Filtertücher erforderliche Volumenstrom der Reinigungsflüssigkeit vergleichsweise groß ist, läßt sich der insgesamt erforderliche Volumenstrom begrenzen, wenn jeweils immer nur einige wenige Filtertücher gleichzeitig gereinigt werden. Die insgesamt zur Verfügung zu stellende Pumpenleistung kann daher im Vergleich zu einer Simultanreinigung sämtlicher Filtertücher einer Sektion deutlich reduziert werden, was sich kostensenkend auswirkt.

Die Gesamtlänge eines einzelnen Spritzrohrs läßt sich dadurch verringern, daß an gegenüberliegenden Längsseiten der Filterpresse jeweils ein demselben Zwischenraum zugeordnetes Spritzrohr angeordnet ist und die Spritzrohre in ihrer Reinigungsposition mit ihren Längsachsen koaxial zueinander ausgerichtet sind. Aufgrund der ungefähr halbierten Spritzrohrlänge ist die Stabilität bei gleichem Rohrdurchmesser deutlich erhöht und die Gesamthöhe der Filterpresse kann wegen der senkrechten Lage der kürzeren Spritzrohre in der Ruheposition reduziert werden.

Im Rahmen der Erfindung wird außerdem vorgeschlagen, daß an der Hubvorrichtung eine Transportvorrichtung zur Verschiebung einer oder mehrerer Filterplatten bei in Längsrichtung der Filterpresse stillstehender Hubvorrichtung angebracht ist.

Während, ausgehend von einer Stellung, in der sämtliche Filterplatten gegeneinander anliegen, die erste Sektion mit Hilfe des hydraulischen Schließmechanismus der Filterpresse zu öffnen ist, ist dies beim Auseinanderziehen der Filterplatten der zweiten Sektion nicht mehr der Fall, da gleichzeitig damit die Filterplatten der zuvor entleerten ersten Sektion wieder zusammengeschoben werden müssen. Insgesamt ist nämlich das Pressengestell in seiner Länge nur so bemessen, daß die Filterplatten einer einzigen Sektion auf Entleerungsabstand auseinandergezogen werden können.

Vorteilhafterweise ist die Transporteinrichtung für den Kuchenaustrag an der Entriegelungseinrichtung des Hubwagens angebracht, da hiermit gegenüber einer starr mit dem Gestell verbundenen Transporteinrichtung der Vorteil kleinerer erforderlicher Stellwege sowie Reichweiten verbunden ist. Die Verbindung der Transporteinrichtung mit der Entriegelungseinrichtung bietet in diesem Zusammenhang die Möglichkeit, die Kopplung eines Übertragungsteils der Transportvorrichtung mit Mitnehmern an der Filterplatte von der abgesenkten Stellung der Entriegelungseinrichtung, d.h. vom entriegelten Zustand der Filterplatten, abhängig zu machen.

Um das Austreten von möglicherweise treibendem Filterkuchen aus der ersten Filterkammer der gerade noch nicht geöffneten Sektion zu verhindern, ist noch vorgesehen, daß der Hubwagen mit einer Verriegelungseinrichtung versehen ist, mit der die Filterplatte, die an die gerade zu entleerende und zu reinigende Sektion von Filterplatten anschließt, relativ zu dem Hubwagen festlegbar ist. Der Hubwagen ist während des Entleerungs- und Reinigungsvorgangs relativ zu dem Pressengestell festgelegt.

Der Plattentransport bei der Filtertuchreinigung erfolgt anders als beim Plattentransport zwecks Kuchenaustrags durch Erfassen des Mitnehmerbolzens der ersten Platte des als nächstes zu reinigenden Pakets durch einen an der eingeschwenkten Entriegelungsvorrichtung befestigten Mitnehmer in Verbindung mit einer Bewegung des gesamten Hubwagens. Zu diesem Zweck ist ein an der Entriegelungseinrichtung befestigter Mitnehmer mit den Mitnehmerbolzen der Filterplatte in Eingriff bringbar.

Die Unterschiede des Plattentransports beim Kuchenaustrag und bei der Filtertuchreinigung sind dadurch begründet, daß der Plattentransport beim Kuchenaustrag an der Anpreßplatte beginnend in Richtung derselben erfolgt. Beim Filtertuchreinigen beginnt jedoch zwecks Vermeidung einer Totzeit der Plattentransport nach dem Kuchenaustrag in der letzten Plattensektion an der Stützplattenseite in Richtung derselben, das heißt also in umgekehrter Richtung wie beim Kuchenaustrag.

Die Erfindung wird nachfolgend anhand eines Ausführungsbeispiels einer Filterpresse, die in der Zeichnung dargestellt ist, näher erläutert. Es zeigt:
- Fig. 1: eine Seitenansicht einer Filterpresse, teilweise im Schnitt;
- Fig. 2: eine Stirnansicht in einem Schnitt entlang der Linie II-II der Filterpresse gemäß Fig. 1 und
- Fig. 3: unterschiedliche Phasen des Entleerungs- und Reinigungsvorgangs
- bis 5: mit drei verschiedenen Positionen der Umlenkkörper bzw. Spritzrohre.

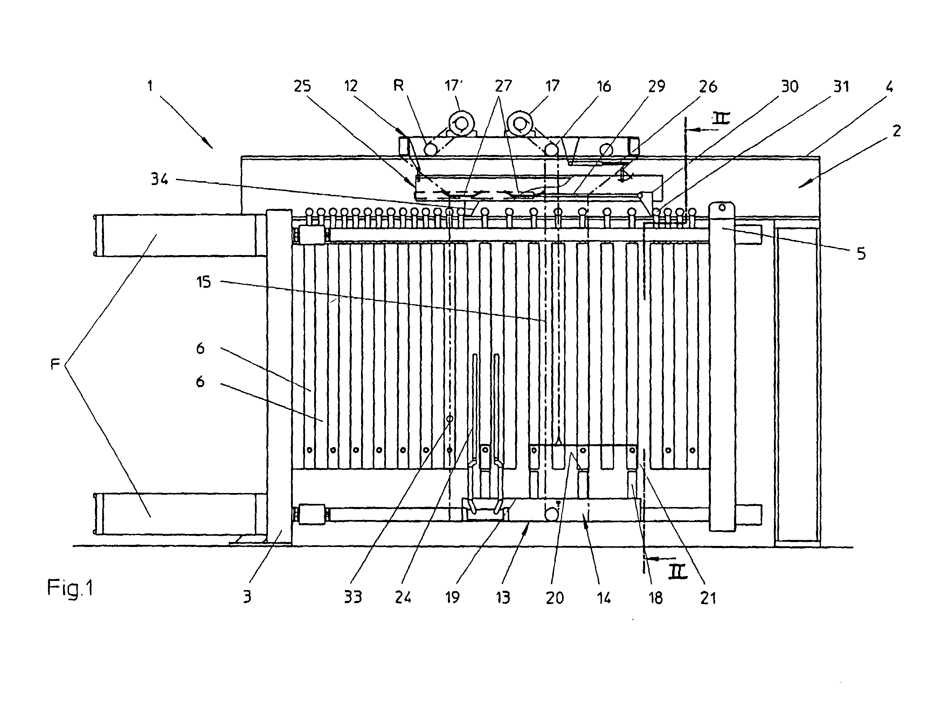

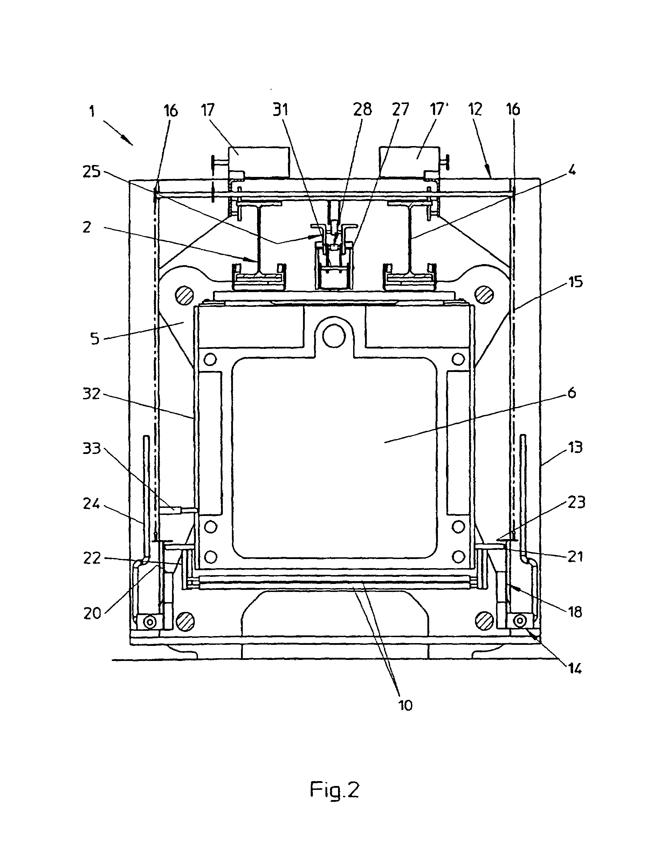

Die in den Figuren 1 und 2 dargestellte Filterpresse 1 zur Filtration von Suspensionen besteht im wesentlichen aus einem im Boden verankerten Gestell 2, einer daran befestigten Stützplatte 3 sowie einer an Längsträgern 4 des Gestells 2 horizontal verschiebbar gelagerten Anpreßplatte 5, die mit Hilfe von vier stirnseitig angeordneten Fluidzylindern F in Richtung auf die Stützplatte 3 preßbar ist. Zwischen der Anpreßplatte 5 und der Stützplatte 3 befindet sich ein Paket vertikal ausgerichteter und hängend ebenfalls an den Längsträgern 4 gelagerter Filterplatten 6. Jeweils von zwei benachbarten Filterplatten 6 wird im aneinandergepreßten Zustand der Filterplatten 6 eine Filterkammer begrenzt, die mit Hilfe randseitig umlaufender und vorstehender Membranwulste druckdicht abgeschlossen und mit der zu filternden, unter Druck stehenden Suspension beaufschlagbar ist.

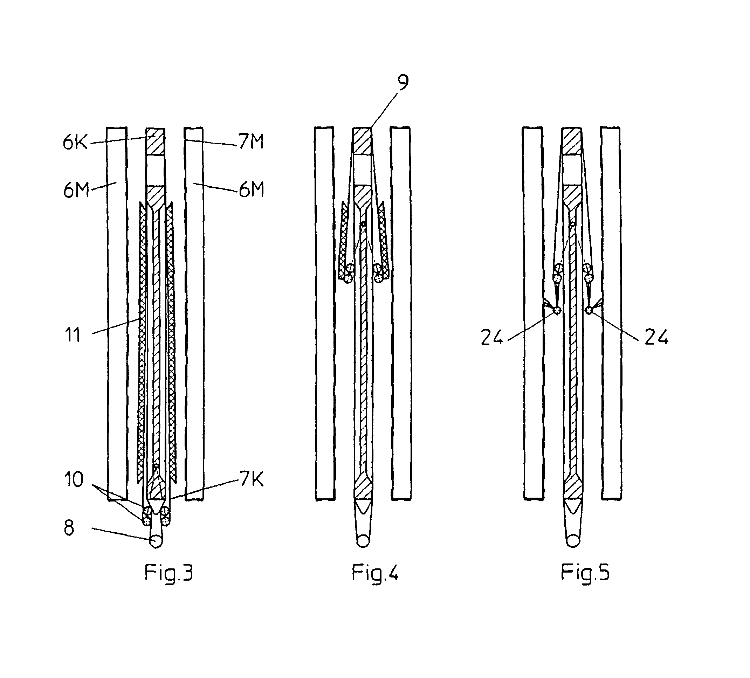

Wie sich den Figuren 3 bis 5 entnehmen läßt, besteht das Paket der Filterplatten 6 aus abwechselnd hintereinander angeordneten Kammerplatten 6K und Membranplatten 6M. Ein Filtertuch 7K der Kammerplatte 6K und ein Filtertuch 7M der Membranplatte 6M bilden einen Abschluß einer Filterkammer in beide Richtungen, so daß beim Durchtritt der Suspension durch die Poren der Filtertücher 7K und 7M die auszufilternden Feststoffe in der Filterkammer zurückgehalten werden, während das Filtrat durch die Kammerplatte 6K und Membranplatte 6M zu einem Filtratablauf geführt wird. Das Filtertuch 7K einer Kammerplatte 6K wird unterhalb derselben durch ein stangenförmiges Gewicht 8 gespannt und im Bereich desselben von einer auf die andere Seite umgelenkt, um somit für zwei benachbarte Filterkammern gleichzeitig Verwendung zu finden. Die Enden des Filtertuchs 7K sind an den oberen Stimkanten 9 der Kammerplatte 6K befestigt.

Jeweils einer Hälfte des Filtertuchs 7K, das heißt jeweils einer Filterkammer, sind zwei Umlenkkörper 10 in Form eines Walzenpaares zugeordnet, um das das Filtertuch 7K S-förmig verläuft. Im geschlossenen Zustand des Filterplattenpakets befinden sich die zwei jeweils einer Kammerplatte 6K zugeordneten Walzenpaare weitgehend innerhalb der vertikalen Projektion der Kammerplatte 6K unterhalb derselben.

Nach Abschluß des Filtrations-, Abpreß- sowie eventuell Waschvorgangs befindet sich der Filterkuchen 11 im wesentlichen in der Kammerhälfte der Kammerplatte 6K und haftet bevorzugt am Filtertuch 7K der Kammerplatte 6K. Der Vorgang zum Lösen des Filterkuchens 11 vom Filtertuch 7K wird später erläutert.

Mit Blick wiederum auf die Figuren 1 und 2 ist zu erkennen, daß die Filterpresse 1 eine Hubvorrichtung in Form eines Hubwagens 12 aufweist, der mittels einer nicht dargestellten Ritzel-Zahnstangen-Kombination auf den Längsträgern 4 des Gestells 2 in horizontale Richtung verfahrbar ist. Der Antrieb des Ritzels R erfolgt mit Hilfe eines Elektromotors 17'. Der Hubwagen 12 weist eine U-förmige Gestalt auf, wobei sich die beiden freien U-Schenkel in vertikale Richtung in Form von Seitenteilen 13 neben den Längsseiten der Filterpresse 1 erstrekken. In den starr mit den übrigen Hubwagen 12 verbundenen Seitenteilen 13 ist jeweils ein vertikal verfahrbares Hubelement 14 geführt. Die Hubelemente 14 erstrecken sich in Längsrichtung der Filterpresse 1 lediglich über die Länge von beispielsweise acht benachbarten Filterplatten 6.

Die vertikale Auf- und Abbewegung der Hubelemente 14 erfolgt mit Hilfe zweier Antriebsketten 15, die mit jeweils einem Ritzel 16, das von einem Elektromotor 17 angetrieben wird, im Eingriff steht. Die Hubelemente 14 selbst besitzen jeweils vier Aufnahmeelemente 18 in Form von senkrecht ausgerichteten Zapfen, die an einem balkenförmigen Grundkörper 19 der Hubelemente 14 befestigt sind. Waagerecht verlaufende Aufnahmeflächen 20 der Aufnahmeelemente 18 sind bei einer Aufwärtsbewegung der Hubelemente 14 mit Mitnehmern 21 in Kontakt bringbar, die über Hebel 22 mit den Walzenpaaren verbunden sind. Die Hubelemente 14 sind des weiteren mit oberen Anschlagflächen 23 versehen, die bei einer Abwärtsbewegung der Hubelemente 14 für eine sichere Mitnahme der Walzenpaare ebenfalls nach unten sorgen. An den Kammerplatten 6 K sind Führungsprofile 32 angebracht, die für eine sichere Vertikalführung der Walzenpaare sorgen.

Wie aus den Figuren 1 und 2 des weiteren ersichtlich ist, sind an den Grundkörpern 19 der Hubelemente 14 jeweils zwei Spritzrohre 24 schwenkbar befestigt. Die Spritzrohre 24 können von der in den Figuren dargestellten vertikalen Ruheposition in eine Reinigungsposition geschwenkt werden, in der sie waagerecht ausgerichtet sind. Dabei verbleibt zwischen den freien Enden der Spritzrohre 24 ein geringfügiger Spalt. Die Spritzrohre 24 sind mit Düsen versehen, aus denen unter Druck stehende Reinigungsflüssigkeit jeweils auf die Filtertücher der Kammerplatten 6 K und der Membranplatten 6M aufgebracht werden kann. Benachbarte Spritzrohre 24 besitzen in Längsrichtung der Filterpresse 1 einen solchen Abstand, daß sie in aufeinanderfolgende Zwischenräume zwischen jeweils zwei Filterplatten 6 mittig einschwenkbar sind.

Im oberen Bereich des Hubwagens 12 ist dieser mit einer vertikal verstellbaren Entriegelungseinrichtung 25 versehen. Die Entriegelungseinrichtung 25 befindet sich zwischen den zwei horizontalen Längsträgern 4 und ist mit Hilfe eines an dem Hubwagen 12 befestigten Fluidzylinders 26 unter Beibehaltung ihrer horizontalen Ausrichtung in vertikaler Richtung verlagerbar. Dies erfolgt über entsprechend angeordnete Gelenkhebel.

Die Entriegelungseinrichtung 25 ist mit kufenförmigen Kontaktflächen 27 ausgestattet, mit denen im abgesenkten Zustand der Entriegelungseinrichtung 25 eine Schaltkraft zur Entriegelung auf benachbarte Filterplatten 6 verbindende Verbindungslaschen ausübbar ist. Auf diese Weise kann das Filterplattenpaket nach dem eigentlichen Filtrationsvorgang zunächst verriegelt bleiben. Es erfolgt jeweils nur eine Entriegelung der Verbindungslaschen derjenigen Filterplatten 6, die zu der gerade zu entleerenden Sektion gehören.

Die Entriegelungseinrichtung 25 weist des weiteren eine Transporteinrichtung 28 auf, die aus einem Fluidzylinder 29 und einer am Ende deren Kolbenstange befestigten Mitnahmeelement 30 besteht. Das Mitnahmeelement 30 ist in der abgesenkten Stellung der Entriegelungseinrichtung 25 mit Mitnehmerbolzen 31 der Filterplattenaufhängung in Kontakt bringbar. Auf diese Weise lassen sich aufgrund der Kopplung der Filterplatten 6 mittels der Verbindungslaschen durch Angriff an einer einzelnen Filterplatte 6 die Filterplatten einer gesamten Sektion auf Entleerungsabstand auseinanderziehen.

Der Funktionsablauf während eines Entleerungs- und eventuellen Reinigungsvorgangs wird nachfolgend näher beschrieben:

Ausgehend von einer auf Block zusammengepreßten Stellung des Filterplattenpakets wird der Hubwagen 12 an das der Anpreßplatte 5 zugewandte Ende des Plattenpakets verfahren bzw. befindet sich während des Filtrationsvorgangs bereits dort. Mittels einer an den Seitenteilen 13 des Hubwagens 12 angeordneten Verriegelungseinrichtung 33 ist die erste Filterplatte 6 der zweiten, noch geschlossenen Sektion an dem Hubwagen 12 und damit an dem Gestell 2 arritierbar. Hierdurch wird verhindert, daß treibende Filterkuchen die Filterplatten 6 einer geschlossenen Sektion auseinander drücken. Nach Absenken der Entriegelungseinrichtung 25 werden die Filterplatten 6 der ersten nunmehr entriegelten Sektion durch Verfahren der Anpreßplatte 5 mit Hilfe der Fluidzylinder F auf Entleerungsabstand auseinandergezogen.

Mit den Spritzrohren 24 in vertikaler Ruhestellung werden nunmehr die Hubelemente 14 vertikal nach oben verfahren, wodurch die Aufnahmeflächen 20 der vier Zapfen 18 an den Mitnehmern 21 der Walzenpaare zur Anlage kommen und diese nachfolgend mit sich nach oben nehmen, wodurch der Filterkuchen ausgetragen wird.

Zwecks Entleerung der Filterkammern der nächsten Sektion wird der Hubwagen 12 zunächst um den entsprechenden Betrag in Längsrichtung der Filterpresse 1 verfahren. Durch Absenken der Entriegelungseinrichtung 25 werden die Filterplatten dieser Sektion entriegelt. Mit Hilfe der Transporteinrichtung 28 werden die Filterplatten 6 der entriegelten Sektion auseinandergeschoben, wobei gleichzeitig die Filterplatten 6 der zuvor entleerten Sektion wieder zusammengeschoben werden. Der vorgenannte Vorgang wiederholt sich Sektion für Sektion, bis sämtliche Filterkammern entleert sind.

Nach Beendigung des Austragevorgangs schließt sich unter Umständen ein Reinigungsvorgang der Filtertücher mit Hilfe der Spritzrohre 24 an. Um unnötige Totzeit zu sparen, beginnt der Reinigungsvorgang nach dem letzten Kuchenaustrag von der Stützplattenseite und nicht wie der Entleerungsvorgang von der Anpreßplattenseite aus. Hierzu wird zunächst das Plattenpaket bis auf die beiden letzten Kammern der letzten Sektion geschlossen. Die Spritzrohre 24 werden hierzu um 90° in die Zwischenräume eingeschwenkt.

Anschließend kommt es zu einer erneuten Auf- und Abbewegung der Hubelemente 14, durch die jedoch jeweils nur zwei Filterkammern gleichzeitig gereinigt werden, da zur Verminderung des Volumenstroms der Reinigungsflüssigkeit und damit der zur Verfügung zu stellenden Pumpenleistung bewußt lediglich zwei Spritzrohre 24 vorhanden sind. Die Mitnehmer 21 der übrigen Kammerplatten 6 K werden bei dieser Hubbewegung nicht erfaßt, da sie sich in den Zwischenräumen zwischen den Aufnahmeelementen 18 befinden.

Die Reinigung der übrigen Filterkammern erfolgt nachdem der Hubwagen 12 um den erforderlichen Betrag horizontal in Richtung der Anpreßplatte verfahren wurde. Danach wird die Entriegelungseinrichtung 25 in die Entriegelungsposition geschwenkt. Dabei erfaßt ein an der Entriegelungseinrichtung 25 befestigter Mitnehmer 34 den Mitnehmerbolzen 31 der ersten Platte des geschlossenen Plattenpakets. Im nächsten Schritt wird der Hubwagen 12 Richtung Stützplatte 3 bewegt, öffnet dadurch die nächsten zu reinigenden Kammern und schließt gleichzeitig die beiden bereits zuvor gereinigten Kammern. Dieser Vorgang wiederholt sich so lange, bis sämtliche Filterkammern gereinigt worden sind.

## Patentansprüche

1. Filterpresse (1) zur Filtration von Suspensionen, bestehend aus einem Gestell (2), einer daran befestigten Stützplatte (3), einer verschiebbaren Anpreßplatte (5) und einem Paket vertikaler Filterplatten (6), die zwischen der Stützplatte (3) und der Anpreßplatte (5) angeordnet sind, wobei jede sich zwischen jeweils zwei Filterplatten (6) befindliche Filterkammer mindestens ein Filtertuch (7K) aufweist, das S-förmig um einen horizontal ausgerichteten Umlenkkörper (10) geführt ist, und wobei die Umlenkkörper (10) mittels zweier, auf gegenüberliegenden Längsseiten der Filterpresse (1) angeordneter Hubelemente (14) einer Hubvorrichtung, die mit stirnseitig vorstehenden Mitnehmern (21) der Umlenkkörper (10) koppelbar sind, vertikal und relativ zu dem zugeordneten Filtertuch bewegbar sind, **dadurch gekennzeichnet, daß** sich die Hubvorrichtung insgesamt in Richtung einer Längsachse der Filterpresse (1) lediglich über einen Teilbereich der Länge des Filterplattenpakets erstreckt und in Richtung der Längsachse der Filterpresse (1) bewegbar ist, wobei die Hubelemente (14) relativ zu der Hubvorrichtung lediglich in vertikale Richtung bewegbar sind.

2. Filterpresse nach Anspruch 1, **dadurch gekennzeichnet, daß** die Hubvorrichtung ein Hubwagen (12) ist, der auf oberen horizontalen Längsträgern (4) des Gestells (2) verfahrbar und mit zwei vertikal ausgerichteten, sich seitlich neben das Filterplattenpaket erstreckenden Seitenteilen (13) versehen ist, in denen die Hubelemente (14) geführt sind.

3. Filterpresse nach Anspruch 1 oder 2, **dadurch gekennzeichnet, daß** die Hubelemente (14) Aufnahmeelemente aufweisen, deren Mittelabstand mit dem Abstand der Mitnehmer (21) der Umlenkkörper (10) übereinstimmt, der vorliegt, wenn zwei benachbarte Filterplatten (6) um einen durch die Verbindungslaschen definierten Entleerungsabstand voneinander entfernt sind, wobei die Gesamtzahl der Filterplatten (6) einem ganzzahligen Vielfachen der Anzahl der Aufnahmeelemente der Hubelemente (14) entspricht.

4. Filterpresse nach Anspruch 3, **dadurch gekennzeichnet, daß** die Mitnehmer (21) als Bolzen und die Aufnahmeelemente (18) als Zapfen ausgebildet sind, die sich von einem waagerecht ausgerichteten Grundkörper (19) des Hubelements (14) senkrecht nach oben erstrecken.

5. Filterpresse nach einem der Ansprüche 1 bis 4, **dadurch gekennzeichnet, daß** die Hubelemente (14) Rückholelemente (23) aufweisen, die bei einer Abwärtsbewegung der Hubelemente (14) einen Formschluß mit den Mitnehmern (21) bewirken.

6. Filterpresse nach einem der Ansprüche 1 bis 5, **dadurch gekennzeichnet, daß** der Hubwagen (12) eine vertikal zu diesem verstellbare Entriegelungseinrichtung (25) aufweist, wobei mittels Kontaktflächen (27) der Entriegelungseinrichtung (25) auf Schaltflächen von gelenkig mit jeweils einer Filterplatte (6) verbundenen Verbindungslaschen zwischen jeweils benachbarten Filterplatten (6) eine Schaltkraft zur Entriegelung der Verbindungslaschen ausübbar ist.

7. Filterpresse nach Anspruch 6, **dadurch gekennzeichnet, daß** die Kontaktflächen (27) als Kufen ausgebildet sind und die Entriegelungseinrichtung (25) mittels eines Fluidzylinders (26) aus einer Ruheposition, in der sich die Kontaktflächen (27) oberhalb der Schaltflächen befinden, in eine Schaltposition verschwenkbar ist, in der die Verbindungslaschen entriegelt sind.

8. Filterpresse nach einem der Ansprüche 1 bis 7, **dadurch gekennzeichnet, daß** an dem Hubelement (14) mindestens ein Spritzrohr (24) gelenkig befestigt ist, das aus einer Ruheposition, in der es senkrecht und vollständig außerhalb einer Projektion der Filterplatten (6) in Längsrichtung der Filterpresse (1) angeordnet ist, in eine Reinigungsposition überführbar ist, in der es ungefähr waagerecht ist, wobei die Filtertücher (7K, 7M) über ihre gesamte Breite mit einer aus Düsen des Spritzrohrs (24) unter Druck austretenden Reinigungsflüssigkeit beaufschlagbar sind.

9. Filterpresse nach Anspruch 8, **dadurch gekennzeichnet, daß** die Anzahl der bei einer Hubbewegung reinigbaren Filtertücher (7) kleiner ist als die Anzahl der an einem Hubelement (14) vorhandenen Aufnahmeelemente (18).

10. Filterpresse nach einem der Ansprüche 8 oder 9, **dadurch gekennzeichnet, daß** an gegenüberliegenden Längsseiten der Filterpresse (1) jeweils ein demselben Zwischenraum zugeordnetes Spritzrohr (24) angeordnet ist und die-Spritzrohre (24) in ihrer Reinigungsposition mit ihren Längsachsen koaxial zueinander ausgerichtet sind.

11. Filterpresse nach einem der Ansprüche 1 bis 10, **dadurch gekennzeichnet, daß** an der Hubvorrichtung eine Transporteinrichtung (28) zur Verschiebung einer oder mehrerer Filterplatten (6) bei in Längsrichtung der Filterpresse (1) stillstehender Hubvorrichtung angebracht ist.

12. Filterpresse nach den Ansprüchen 11 und 6, **dadurch gekennzeichnet, daß** die Transporteinrichtung (28) für den Kuchenaustrag an der Entriegelungseinrichtung (25) des Hubwagens (12) angebracht ist.

13. Filterpresse nach einem der Ansprüche 2 bis 12, **dadurch gekennzeichnet, daß** der Hubwagen (12) mit einer Verriegelungseinrichtung versehen ist, mit der die Filterplatte (6), die an die gerade zu entleerende Sektion von Filterplatten (6) anschließt, relativ zu dem Hubwagen (12) festlegbar ist.

14. Filterpresse nach einem der Ansprüche 6 bis 13, **dadurch gekennzeichnet, daß** ein an der Entriegelungseinrichtung (25) befestigter Mitnehmer (34) mit dem Mitnehmerbolzen (31) der Filterplatten (6) in Eingriff bringbar ist.

## Claims

1. Filter press (1) for filtration of suspensions, comprising a chassis (2), a support plate (3) attached thereto, a displaceable pressure plate (5) and a packet of vertical filter plates (6) arranged between the support plate (3) and the pressure plate (5), whereby every filter chamber situated, in each case, between two filter plates (6) has at least one filter cloth (7K), which is guided in an S-shape round a horizontally arranged deflection body (10), and whereby the deflection bodies (10) are movable vertically and relative to the allocated filter cloth by means of two elevating elements (14) of an elevating device, said elevating elements being arranged on opposing longitudinal sides of the filter press (1) and capable of being coupled to drivers (21) of the deflection bodies (10) projecting on the end face, **characterised in that** the elevating device extends altogether in the direction of a longitudinal axis of the filter press (1) over only a partial region of the length of the filter plate packet and is movable in the direction of the longitudinal axis of the filter press (1), whereby the elevating elements (14) are movable relative to the elevating device only in the vertical direction.

2. Filter press according to Claim 1, **characterised in that** the elevating device is an elevating wagon (12) which is drivable on upper horizontal longitudinal beams (4) of the chassis (2) and is provided with two vertically directed side members (13) in which the elevating elements (14) are guided.

3. Filter press according to Claim 1 or 2, **characterised in that** the elevating elements (14) have accommodation elements whose average separation matches the separation of the drivers (21) of the deflection bodies (10) which arises when two adjacent filter plates (6) are separated from each other by an emptying separation defined by the connecting straps, whereby the total number of filter plates (6) corresponds to a whole number multiple of the number of accommodating elements of the elevating elements (14).

4. Filter press according to Claim 3, **characterised in that** the drivers (21) are designed as bolts and the accommodating elements (18) are designed as spigots extending vertically upwards from a horizontally arranged base body (19) of the elevating element (14).

5. Filter press according to one of the claims 1 to 4, **characterised in that** the elevating elements (14) have return elements (23) which in the event of a downward movement of the elevating elements (14) bring about a form-fit with the drivers (21).

6. Filter press according to one of the claims 1 to 5, **characterised in that** the elevating wagon (12) has an unlocking apparatus (25) adjustable vertically relative to it, whereby by means of contact surfaces (27) of the unlocking apparatus (25) a switching force for unlocking the connecting straps may be exerted on switching surfaces of connecting straps connected, in each case, in articulated fashion to a filter plate (6) between adjacent filter plates (6) in each case.

7. Filter press according to Claim 6, **characterised in that** the contact surfaces (27) are designed as skids and the unlocking apparatus (25) may be rotated by means of a fluid cylinder (26) out of a rest position in which the contact surfaces (27) are located above the switching surfaces into a switching position in which the connecting straps are unlocked.

8. Filter press according to one of the claims 1 to 7, **characterised in that** at least one spray tube (24) is attached in articulated fashion to the elevating element (14), said spray tube being transferable from a rest position in which it is arranged upright and entirely outside a projection of the filter plates (6) in the longitudinal direction of the filter press (1), into a cleaning position in which it is approximately horizontal, whereby the filter cloths (7K, 7M) may be sprayed over their entire width with cleaning fluid emerging under pressure from nozzles of the spray tube (24).

9. Filter press according to Claim 8, **characterised in that** the number of filter cloths (7) able to be cleaned during an elevation movement is smaller than the number of accommodating elements (18) present on an elevating element (14).

10. Filter press according to one of the claims 8 or 9, **characterised in that** arranged on opposing longitudinal sides of the filter press (1), in each case, is a spray tube (24) assigned to the same intermediate space and the spray tubes (24) are directed with their longitudinal axes coaxial with each other in their cleaning position.

11. Filter press according to one of the claims 1 to 10, **characterised in that** mounted on the elevating device is a transport apparatus (28) for displacing one or a plurality of filter plates (6) with the elevating device standing still in the longitudinal direction of the filter press (1).

12. Filter press according to the claims 11 and 6, **characterised in that** the transport apparatus (28) for cake removal is mounted on the unlocking apparatus (25) of the elevating wagon (12).

13. Filter press according to one of the claims 2 to 12, **characterised in that** the elevating wagon (12) is provided with a locking apparatus with which the filter plate (6) adjoining the section of filter plates (6) about to be emptied may be fixed relative to the elevating wagon (12).

14. Filter press according to one of the claims 6 to 13, **characterised in that** a driver (34) attached to the unlocking apparatus (25) may be brought into engagement with driver bolts (31) of the filter plates (6).

## Revendications

1. Filtre-presse (1) pour la filtration de suspensions, constitué d'un bâti (2), d'un plateau (3) d'appui qui y est fixé, d'un plateau (5) coulissant d'application d'une pression et d'un paquet de plateaux (6) verticaux de filtre qui sont interposés entre le plateau (3) d'appui et le plateau (5) d'application d'une pression, chaque chambre de filtre se trouvant entre respectivement deux plateaux (6) de filtre ayant au moins un tissu (7K) filtrant qui est guidé en forme de S autour d'un corps (10) de renvoi dirigé horizontalement et les corps (10) de renvoi pouvant être déplacés au moyen de deux éléments (14) de levage d'un dispositif de levage qui sont disposés sur les côtés longitudinaux opposés du filtre-presse (1) et qui peuvent être accouplés à des entraîneurs (21) en saillie du côté frontal des corps (10) de renvoi verticalement et relativement au tissu filtrant associé, **caractérisé en ce que** le dispositif de levage s'étend dans l'ensemble en direction d'un axe longitudinal du filtre-presse (1) seulement sur une partie de la longueur du paquet de plateaux de filtre et est mobile en direction de l'axe longitudinal du filtre-presse (1), les éléments (14) de levage pouvant être déplacés relativement au dispositif de levage seulement dans la direction verticale.

2. Filtre-presse suivant la revendication 1, **caractérisé en ce que** le dispositif de levage est un chariot (12) de levage qui peut être déplacé sur des longerons (4) horizontaux supérieurs du bâti (2) et qui est muni de deux parties (13) latérales dirigées verticalement qui s'étendent latéralement à côté du paquet de plateaux de filtre et dans lesquelles sont guidés les éléments (14) de levage.

3. Filtre-presse suivant la revendication 1 ou 2, **caractérisé en ce que** les éléments (14) de levage ont des éléments de réception dont la distance des milieux coïncide avec la distance des entraîneurs (21) de corps (10) de renvoi qui existe lorsque deux plateaux (6) voisins de filtre sont éloignés l'un de l'autre d'une distance de vidange définie par les pattes de liaison, le nombre total des plateaux (6) de filtre correspondant à un multiple entier du nombre des éléments de réception des éléments (14) de levage.

4. Filtre-presse suivant la revendication 3, **caractérisé en ce que** les entraîneurs (21) sont constitués sous la forme d'axes et les éléments (18) de réception sous la forme de tourillons qui s'étendent d'une embase (19) dirigée verticalement de l'élément (14) de levage verticalement vers le haut.

5. Filtre-presse suivant l'une des revendications 1 à 4, **caractérisé en ce que** les éléments (14) de levage ont des éléments (23) de rappel qui provoquent, lors d'un mouvement vers le bas des éléments (14) de levage, une coopération par complémentarité de forme avec les entraîneurs (21).

6. Filtre-presse suivant l'une des revendications 1 à 5, **caractérisé en ce que** le chariot (12) de levage a un dispositif (25) de déverrouillage pouvant être déplacé verticalement par rapport à celui-ci, une force de commutation pour le déverrouillage des pattes de liaison pouvant être appliquée au moyen de surfaces (27) de contact du dispositif (25) de déverrouillage à des surfaces de commutation de pattes de liaison articulées à respectivement un plateau (6) de filtre entre respectivement des plateaux (6) de filtre voisins.

7. Filtre-presse suivant la revendication 6, **caractérisé en ce que** les surfaces (27) de contact sont constituées en patins et le dispositif (25) de déverrouillage peut, au moyen d'un vérin (26) fluidique, basculer d'une position de repos dans laquelle les surfaces (27) de contact se trouvent au-dessus des surfaces de commutation à une position de commutation dans laquelle les pattes de liaison sont déverrouillées.

8. Filtre-presse suivant l'une des revendications 1 à 7, **caractérisé en ce qu'**il est fixé de manière articulée sur l'élément (14) de levage au moins un tube (24) de projection qui peut passer d'une position de repos, dans laquelle il est disposé verticalement et entièrement à l'extérieur d'une projection des plateaux (6) de filtre dans la direction longitudinale des filtres-presses (1) à une position de nettoyage, dans laquelle il est à peu près vertical, les tissus (7K, 7M) filtrants pouvant être alimentés sur toute la largeur en un liquide de nettoyage sortant sous pression des buses du tube (24) de projection.

9. Filtre-presse suivant la revendication 8, **caractérisé en ce que** le nombre des tissus (7) filtrants pouvant être nettoyés par un mouvement de levage est inférieur au nombre des éléments (18) de réception présents sur un élément (14) de levage.

10. Filtre-presse suivant l'une des revendications 8 ou 9, **caractérisé en ce qu'**il est prévu sur les côtés longitudinaux opposés du filtre-presse (1) respectivement un tube (24) de projection associé au même espace intermédiaire, et les axes longitudinaux des tubes (24) de projection en la position de nettoyage de ceux-ci sont coaxiaux.

11. Filtre-presse suivant l'une des revendications 1 à 10, **caractérisé en ce que** sur le dispositif de levage est monté un dispositif (28) de transport pour déplacer un plateau (6) de filtre ou plusieurs plateaux (6) de filtre lorsque le dispositif de levage est à l'arrêt dans la direction longitudinale du filtre-presse (1).

12. Filtre-presse suivant les revendications 11 et 6, **caractérisé en ce que** le dispositif (28) de transport est, pour la sortie du gâteau, monté sur le dispositif (25) de déverrouillage du chariot (12) de levage.

13. Filtre-presse suivant l'une des revendications 2 à 12, **caractérisé en ce que** le chariot (12) de levage est muni d'un dispositif de verrouillage par lequel le plateau (6) de filtre qui se raccorde à la section de plateau (6) de filtre qui vient d'être vidée peut être fixé par rapport au chariot (12) de levage.

14. Filtre-presse suivant l'une des revendications 6 à 13, **caractérisé en ce qu'**un entraîneur (34) fixé au dispositif (25) de déverrouillage peut être mis en prise avec l'axe (31) d'entraîneur des plateaux (6) de filtrage.
